# EUROPÄISCHE PATENTANMELDUNG

(11) **EP 2 161 185 A1**
(43) Veröffentlichungstag der Anmeldung: **10.03.2010**
(21) Anmeldenummer: 09011312.7
(22) Anmeldetag: 03.09.2009
(51) Int. Cl.: B62J 15/02

(54) **Vorrichtung zur Befestigung einer Strebe an einem Radschützer**

(30) Priorität: 03.09.2008 DE 202008011760 U
(71) Anmelder: sks metaplast Scheffer-Klute GmbH, 59846 Sundern (DE)
(72) Erfinder: Kordes, Sven, 59846 Sundern (DE); Grabski, Karsten, 59469 Ense (DE); Krick, Peter, 59872 Meschede (DE)
(74) Vertreter: Basfeld, Rainer

(57) **Zusammenfassung**

Vorrichtung zur Befestigung einer Strebe (7) an einem Radschützer (11), wobei die Vorrichtung zur Befestigung einer als Umlaufstrebe ausgeführten Strebe (7) geeignet ist, die im Verbindungsbereich zum Radschützer (11) eine Umbiegung (6) um einen Winkel zwischen 130° und 200° aufweist, wobei die Vorrichtung ein erstes und ein zweites Befestigungsteil (1, 2) umfassen, die derart miteinander verbunden werden können, dass dadurch die Strebe (7) an dem Radschützer (11), insbesondere lösbar, befestigt, wird.

## Beschreibung

Die vorliegende Erfindung betrifft eine Vorrichtung zur Befestigung einer Strebe an einem Radschützer, wobei die Vorrichtung zur Befestigung einer als Umlaufstrebe ausgeführten Strebe geeignet ist, die im Verbindungsbereich zum Radschützer eine Umbiegung um einen Winkel zwischen 130° und 200° aufweist. Weiterhin betrifft die vorliegende Erfindung einen Radschützer mit einer derartigen Vorrichtung.

Durch die Verwendung von beispielsweise 4 mm starken Umlaufstreben kann erreicht werden, dass lediglich eine Strebe für die Befestigung des Radschützers an einem Fahrrad benötigt wird. Dabei kann jedoch aufgrund der Umbiegung der Umlaufstrebe die Verbindung mit dem Radschützer nicht an dessen Querrändern, sondern im Bereich der Mittellinie des Radschützers erfolgen.

Das der vorliegenden Erfindung zugrunde liegende Problem ist die Schaffung einer Vorrichtung der eingangs genannten Art, die kostengünstig herstellbar und/oder einfach montierbar ist und/oder eine sichere Halterung der Strebe an dem Radschützer gewährleistet.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Vorrichtung ein erstes und ein zweites Befestigungsteil umfassen, die derart miteinander verbunden werden können, dass dadurch die Strebe an dem Radschützer, insbesondere lösbar, befestigt wird. Durch eine derartige Verbindung zweier Befestigungsteile kann eine sichere Halterung der Strebe an dem Radschützer gewährleistet werden.

Weiterhin können die Befestigungsteile kostengünstig herstellbar und einfach montierbar und vorzugsweise auch demontierbar sein.

Dabei kann das erste der beiden Befestigungsteile durch eine Öffnung in dem Radschützer zumindest teilweise hindurch greifen. Weiterhin kann das zweite der beiden Befestigungsteile auf einen durch die Öffnung in dem Radschützer hindurch ragenden Teil des ersten Befestigungsteils aufbringbar und an diesem befestigbar sein. Dadurch wird durch die Verbindung der beiden Teile miteinander gleichzeitig die Anbringung an dem Radschützer realisiert.

Vorteilhafterweise sind die beiden Befestigungsteile werkzeuglos aneinander befestigbar und/oder voneinander lösbar. Dies kann beispielsweise dadurch erreicht werden, dass die Verbindung zwischen den beiden Befestigungsteilen einem Bajonettverschluss entspricht. Eine derartige Gestaltung erlaubt eine einfache Montage und Demontage an dem Radschützer.

Es kann weiterhin vorgesehen sein, dass eines der beiden Befestigungsteile eine Aufnahme für die Umbiegung der Strebe aufweist. Auf diese Weise kann durch die Verbindung der beiden Befestigungsteile miteinander nicht nur gleichzeitig die Anbringung der Befestigungsteile, sondern auch die Anbringung der Strebe an dem Radschützer realisiert werden.

Es besteht weiterhin die Möglichkeit, dass das erste und/oder das zweite Befestigungsteil aus Kunststoff bestehen oder Kunststoff umfassen. Dabei können das erste und/oder das zweite Befestigungsteil als Spritzgussteile ausgebildet sein. Dadurch lässt sich die Vorrichtung kostengünstig in großen Stückzahlen herstellen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Explosionsansicht einer erfindungsgemäßen Vorrichtung mit einem Radschützer und einer Strebe;
- Fig. 2: eine Untenansicht der Vorrichtung mit dem Radschützer und der Strebe gemäß Fig. 1;
- Fig. 3: eine Ansicht gemäß den Pfeilen III - III in Fig. 2;
- Fig. 4: eine Ansicht gemäß dem Pfeilen IV in Fig. 3;
- Fig. 5: eine Seitenansicht der Vorrichtung mit dem Radschützer und der Strebe gemäß Fig. 1;
- Fig. 6: eine Ansicht gemäß den Pfeilen VI - VI in Fig. 5;
- Fig. 7: eine Untenansicht des zweiten Befestigungsteils der Vorrichtung gemäß Fig. 1;
- Fig. 8: eine Ansicht gemäß den Pfeilen VIII - VIII in Fig. 7;
- Fig. 9: eine Seitenansicht des ersten Befestigungsteils der Vorrichtung gemäß Fig. 1;
- Fig. 10: eine Untenansicht des ersten Befestigungsteils gemäß Fig. 9.

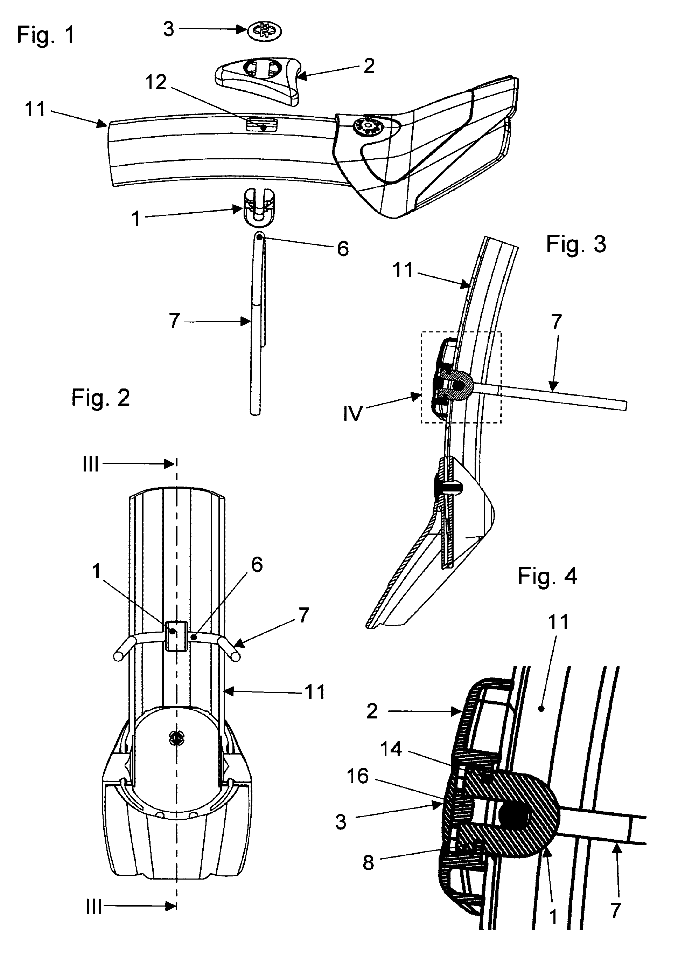

Aus Fig. 1 ist ersichtlich, dass die darin abgebildete Ausführungsform einer erfindungsgemäßen Vorrichtung ein erstes Befestigungsteil 1, ein zweites Befestigungsteil 2 umfasst. Weiterhin ist in Fig. 1 ein Aufkleber 3 abgebildet, der auf das zweite Befestigungsteil 2 aufgeklebt werden kann und lediglich zur optischen Kaschierung des Inneren des zweiten Befestigungsteils 2 dient.

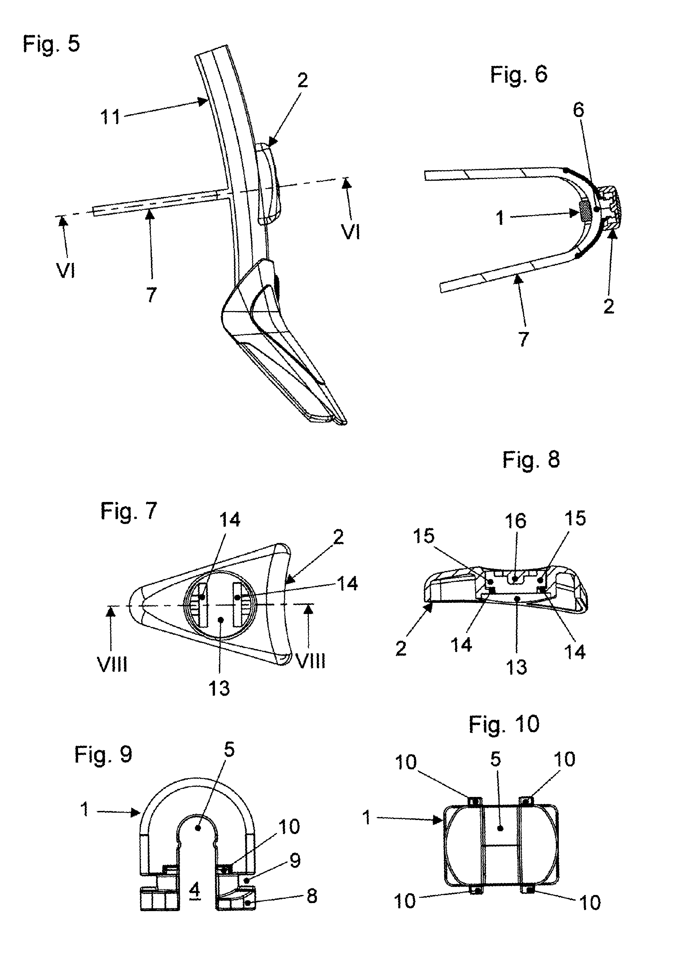

Das erste Befestigungsteil 1 weist im Wesentlichen eine U-Form auf, wobei zwischen den beiden U-Schenkeln eine in Querrichtung beidseitig offene Aufnahme 4 gebildet ist (siehe Fig. 9). Diese Aufnahme 4 weist einen hinterschnittenen Endabschnitt 5 auf, in den eine Umbiegung 6 einer als Umlaufstrebe ausgebildeten Strebe 7 eingebracht werden kann (siehe Fig. 1, Fig. 2, Fig. 4 und Fig. 6).Dabei kann die Umbiegung 6 sich in Querrichtung durch die Aufnahme 4 bezeihungsweise dessen Endabschnitt 5 hindurch erstrecken. Die Umbiegung weist einen Winkel von etwa 170° auf. Die Strebe 7 setzt sich von der Umbiegung 6 weiter fort, als in den Figuren abgebildet. Derartige Streben 7 verbinden einen Radschützer mit dem Fahrrad, insbesondere dessen Radnabe.

In ihrem von dem hinterschnittenen Endabschnitt 5 abgewandten Endbereich weisen die U-Schenkel des ersten Befestigungsteils 1 jeweils einen Vorsprung 8 auf, der jeweils durch eine außen umlaufende Nut 9 von dem mittleren Bereich des U-Schenkels getrennt ist (siehe Fig. 9). Jeweils benachbart zu der Nut 9 sind an dem mittleren Bereich der U-Schenkel Rastnasen 10 angeordnet, die in Querrichtung von dem ersten Befestigungsteil 1 wegragen (siehe Fig. 10).

Der abgebildete Radschützer 11 weist eine Öffnung 12 mit einem rechteckigen Umriss auf, durch die sich ein Teil des ersten Befestigungselementes 1, insbesondere ein Teil der U-Schenkel des ersten Befestigungselementes 1 hindurch erstrecken kann.

Das zweite Befestigungselement 2 weist auf seiner in Einbaulage dem ersten Befestigungselement 1 zugewandten Seite eine Einführöffnung 13 für das erste Befestigungselement 1 auf. Die Einführöffnung 13 weist über einen Teil ihrer Erstreckung einen kreisförmigen Querschnitt auf, wird aber in einem mittleren Bereich von zwei einander gegenüberliegenden Stegen 14 begrenzt, so dass sich darüber in Fig. 8 zwei Hinterschnitte 15 ergeben.

Das zweite Befestigungsteil 2 weist weiterhin im Endbereich der Einführöffnung 13 einen beispielsweise teilzylindrischen Vorsprung 16 auf (siehe Fig. 4 und Fig. 8).

Zur Anbringung der Strebe 7 an dem Radschützer 11 vermittels der erfindungsgemäßen Vorrichtung wird die Umbiegung 6 der Strebe 7 in die Ausnehmung 4 eingeführt und in deren Endabschnitt 5 verrastet.

Daran anschließend wird das erste Befestigungsteil 1 von unten in Fig. 1 teilweise durch die Öffnung 12 hindurchgeführt, bis die Rastnasen 10 ebenfalls durch die Öffnung 12 hindurch geführt sind und ein wenig über die Oberfläche des die Öffnung 12 umgebenden Bereichs des Radschützers 11 ragen. Die Rastnasen 10 können auf diese Weise das erste Befestigungsteil 1 zusammen mit der in dem Endabschnitt 5 verrasteten Strebe 7 temporär zu Montagezwecken an dem Radschützer 11 halten. Hierbei erweist es sich ebenfalls als hilfreich, dass der Endabschnitt 5 der Aufnahme 4 hinterschnitten ausgebildet ist, weil dadurch die Strebe 7 während der Montage gehalten wird.

Daran anschließend wird von oben in Fig. 1 das zweite Befestigungsteil 2 auf die durch die Öffnung 12 nach oben hindurch ragenden Abschnitte der U-Schenkel des ersten Befestigungsteils 1 aufgeschoben, wobei die U-Schenkel in die Einführöffnung 13 eingreifen. Wenn die Vorsprünge 8 im Bereich der Hinterschnitte 15 angelangt sind, kann das zweite Befestigungsteil 2 gegenüber dem ersten Befestigungsteil 1 derart verdreht werden, dass die Vorsprünge 8 in die Hinterschnitte 15 und die Stege 14 in die Nuten 9 eingreifen (siehe dazu Fig. 4). Diese Verbindung entspricht einer Bajonettverbindung. In dieser Stellung ragt auch der Vorsprung 16 in die Aufnahme 4 des ersten Befestigungsteils 1 hinein und sichert so die Verbindung vor unabsichtlichem Öffnen.

Die Demontage der Strebe 7 geschieht in der umgekehrten Reihenfolge.

## Patentansprüche

1. Vorrichtung zur Befestigung einer Strebe (7) an einem Radschützer (11), wobei die Vorrichtung zur Befestigung einer als Umlaufstrebe ausgeführten Strebe (7) geeignet ist, die im Verbindungsbereich zum Radschützer (11) eine Umbiegung (6) um einen Winkel zwischen 130° und 200° aufweist, **dadurch gekennzeichnet, dass** die Vorrichtung ein erstes und ein zweites Befestigungsteil (1, 2) umfassen, die derart miteinander verbunden werden können, dass **dadurch** die Strebe (7) an dem Radschützer (11), insbesondere lösbar, befestigt, wird.

2. Vorrichtung nach Anspruch 1, **dadurch gekennzeichnet, dass** das erste der beiden Befestigungsteile (1, 2) durch eine Öffnung (12) in dem Radschützer (11) zumindest teilweise hindurch greifen kann.

3. Vorrichtung nach Anspruch 2, **dadurch gekennzeichnet, dass** das erste Befestigungsteil (1) Haltemittel aufweist, die zumindest zeitweilig während der Montage der Vorrichtung an dem Radschützer (11) das erste Befestigungsteil (1) in der Öffnung (12) halten können.

4. Vorrichtung nach Anspruch 4, **dadurch gekennzeichnet, dass** die Haltemittel mindestens ein Rastnase (10) umfassen.

5. Vorrichtung nach einem der Ansprüche 1 bis 4, **dadurch gekennzeichnet, dass** das zweite der beiden Befestigungsteile (1, 2) auf einen durch die Öffnung (12) in dem Radschützer (11) hindurch ragenden Teil des ersten Befestigungsteils (1) aufbringbar ist.

6. Vorrichtung nach Anspruch 5, **dadurch gekennzeichnet, dass** das zweite Befestigungsteil (2) an dem durch die Öffnung (12) in dem Radschützer (11) hindurch ragenden Teil des ersten Befestigungsteils (1) befestigbar ist.

7. Vorrichtung nach einem der Ansprüche 1 bis 6, **dadurch gekennzeichnet, dass** die beiden Befestigungsteile (1, 2) werkzeuglos aneinander befestigbar und/oder voneinander lösbar sind.

8. Vorrichtung nach einem der Ansprüche 1 bis 7, **dadurch gekennzeichnet, dass** die beiden Befestigungsteile (1, 2) durch Verdrehen gegeneinander aneinander befestigbar sind.

9. Vorrichtung nach Anspruch 8, **dadurch gekennzeichnet, dass** die Verbindung zwischen den beiden Befestigungsteilen (1, 2) einem Bajonettverschluss entspricht.

10. Vorrichtung nach einem der Ansprüche 8 oder 9, **dadurch gekennzeichnet, dass** eines der Befestigungsteile (1, 2) mindestens einen Vorsprung (8) und das andere der beiden Befestigungsteile (1, 2) mindestens einen Hinterschnitt (15) aufweist, wobei der mindestens eine Vorsprung (8) bei dem Verdrehen der beiden Befestigungsteile gegeneinander in den mindestens einen Hinterschnitt (15) hineinbewegt werden kann.

11. Vorrichtung nach einem der Ansprüche 1 bis 10, **dadurch gekennzeichnet, dass** eines der beiden Befestigungsteile (1, 2) eine Aufnahme (4) für die Umbiegung (6) der Strebe (7) aufweist.

12. Vorrichtung nach Anspruch 11, **dadurch gekennzeichnet, dass** die Aufnahme (4) einen hinterschnittenen Endabschnitt (5) aufweist.

13. Vorrichtung nach einem der Ansprüche 1 bis 12, **dadurch gekennzeichnet, dass** das erste und/oder das zweite Befestigungsteil (1, 2) aus Kunststoff bestehen oder Kunststoff umfassen und als Spritzgussteile ausgebildet sind.

14. Radschützer, umfassend eine Vorrichtung nach einem der Ansprüche 1 bis 23 und eine Öffnung (12) für den Hindurchtritt zumindest eines Teils des ersten der beiden Befestigungsteile (1, 2).

15. Radschützer nach Anspruch 14, **dadurch gekennzeichnet, dass** der Radschützer (11) eine als Umlaufstrebe ausgebildete Strebe (7) umfasst, die einen Querschnitt mit einem Durchmesser zwischen 3,0 mm und 6,0 mm, insbesondere zwischen 3,5 mm und 4,5 mm aufweist.
